# EUROPEAN PATENT APPLICATION

(11) **EP 4 606 689 A2**
(43) Date of publication of application: **27.08.2025**
(21) Application number: 25158290.4
(22) Date of filing: 17.02.2025
(51) Int. Cl.: B62M 25/08, B62M 9/122, B62M 9/123, B62K 23/02, B62M 6/45, B62K 25/04, B62M 9/132, B62M 9/133

(54) **BICYCLE CONTROL SYSTEM**

(30) Priority: 22.02.2024 US 202418584222
(71) Applicant: SRAM Deutschland GmbH, 97424 Schweinfurt (DE)
(72) Inventor: Baumann, Sven, 97424 Schweinfurt (DE); Andres, Sebastian, 97424 Schweinfurt (DE); Bierwerth, Jochen, 97424 Schweinfurt (DE); Koelsch, Andreas, 97424 Schweinfurt (DE)
(74) Representative: Thum, Bernhard

(57) **Abstract**

A method (400) for controlling electronic shifting of a bicycle includes identifying, by a processor, a first gear shift command from the processor (402). The processor determines a first shift direction based on the first gear shift command (404), initiates a shift in the first shift direction based on the first gear shift command (406), and identifies a second gear shift command from a shifting device of the bicycle (408). The processor determines a time period between the identifying of the first gear command and the identifying of the second gear command (410), and compares the determined time period to a predetermined time period (412). The processor controls the electronic shifting of the bicycle, such that the bicycle shifts in a second direction when, based on the comparing, the determined time period is less than the predetermined time period (414-418). The second direction is opposite the first direction.

## Description

### Background

### 1. Field of the Disclosure

The present disclosure is generally directed to bicycle shifting control, and more particularly, modification of an automatic shifting mode.

### 2. Description of Related Art

A bicycle with electronic shifting may include crank speed sensors that generate data, from which cadence may be determined. The generated data and/or the determined cadence may be used as an input to automatic shifting algorithms for a transmission of the bicycle. An automatic shifting algorithm compares the determined cadence to a cadence band and may initiate a shift based on the comparison.

The automatic shifting algorithm works well on smooth terrain. On terrain that is rougher, with topography that changes abruptly, manual override of shifting initiated by the automatic shifting algorithm may be necessary. The manual override may be executed by a user using two override buttons on the bicycle, a first button for outboard shifting and a second button for inboard shifting.

### Summary

In one example, a method for controlling electronic shifting of a bicycle includes identifying, by a processor, a first gear shift command. A source of the first gear shift command is the processor or another processor. The processor determines a first shift direction based on the first gear shift command, initiates a shift of the bicycle in the first shift direction, from a first gear to a second gear, based on the first gear shift command, and identifies a second gear shift command. A source of the second gear shift command is a control device of the bicycle. The second gear shift command is after the first gear shift command. The processor determines a time period between the identifying of the first gear command and the identifying of the second gear command, compares the determined time period to a predetermined time period, and controls the electronic shifting of the bicycle, such that the bicycle shifts in a second direction, at least back to the first gear, when, based on the comparing, the determined time period is less than the predetermined time period. The second direction is opposite the first direction.

In one example, identifying the first gear shift command includes generating, by the processor, the first gear shift command based on an automatic shifting algorithm.

In one example, the method further includes adjusting, by the processor, a cadence range of the automatic shifting algorithm based on the first shift direction.

In one example, identifying the second gear shift command includes receiving, by the processor, the second gear shift command from the control device of the bicycle in response to a user input at an input device of the control device of the bicycle. The method further includes determining a length of the user input. The length of the user input identifies an amount of time of user interaction with the input device of the control device of the bicycle. The controlling further includes controlling, by the processor, the electronic shifting of the bicycle, such that the bicycle shifts in either the first direction or the second direction based on a length of the user input when, based on the comparing, the determined time period is greater than the predetermined time period.

In one example, the input device of the control device is a button or a lever. The input device is the only input device of the control device.

In one example, the user input is a first user input at the input device of the control device. The method further includes identifying, by the processor, a third gear shift command. The third gear shift command is after the second gear shift command. A source of the third gear shift command is the processor. The method further includes determining, by the processor, a shift direction of the third gear shift command. The shift direction of the third gear shift command is the second direction. The method further includes initiating, by the processor, a shift of the bicycle in the second direction, from the first gear to a third gear, based on the third gear shift command, and receiving, by the processor, a fourth gear shift command from the control device of the bicycle in response to a second user input at the same input device of the control device of the bicycle. The fourth gear shift command is after the third gear shift command. The method further includes determining, by the processor, a time period between the identifying of the third gear shift command and the receiving of the fourth gear shift command, and comparing, by the processor, the determined time period between the identifying of the third gear shift command and the receiving of the fourth gear shift command to the predetermined time period. The method further includes controlling, by the processor, the electronic shifting of the bicycle, such that the bicycle shifts in the first direction, at least back to the first gear, when, based on the comparing, the determined time period between the identifying of the third gear shift command and the receiving of the fourth gear shift command is less than the predetermined time period.

In one example, the controlling includes controlling, by the processor, the electronic shifting of the bicycle, such that the bicycle shifts at least two gears, to a third gear beyond the first gear, in the second direction when, based on the comparing, the determined time period is less than the predetermined time period.

In one example, the predetermined time period is a first predetermined time period. The method further includes comparing, by the processor, the determined time period to a second predetermined time period. The controlling includes controlling, by the processor, the electronic shifting of the bicycle, such that the bicycle shifts in the second direction, at least back to the first gear, when: based on the comparing of the determined time period to the second predetermined time period, the determined time period is greater than the second predetermined time period; and based on the comparing of the determined time period to the first predetermined time period, the determined time period is less than the first predetermined time period.

In one example, the controlling further includes ignoring, by the processor, the second gear shift command when, based on the comparing of the determined time period to the second predetermined time period, the determined time period is less than the second predetermined time period.

In one example, the method further includes ignoring any additional gear shift commands from the processor for a third predetermined time period after the identifying of the second gear shift command.

In one example, a method for controlling electronic shifting of a bicycle includes entering, by a processor, an automatic shifting mode of the bicycle, determining, by the processor, a cadence of the bicycle, and comparing, by the processor, the determined cadence of the bicycle to a predetermined threshold cadence. The method also includes initiating, by the processor, a shift of the bicycle in an outboard direction when, based on the comparing, the determined cadence of the bicycle is greater than or equal to the predetermined threshold cadence. The method also includes repeating the determining, the comparing, and the initiating until a deactivation condition is met, such that the bicycle is only shifted in the outboard direction until the deactivation condition is met.

In one example, the automatic shifting mode is an automatic outboard shifting mode. Entering the automatic shifting mode of the bicycle includes determining, by the processor, whether an automatic mode entry condition has been met and entering, by the processor, the automatic shifting mode of the bicycle when, based on the determining, the automatic mode entry condition has been met.

In one example, the automatic mode entry condition includes actuation of an input device of the bicycle for a predetermined amount of time. The input device is in communication with the processor.

In one example, determining the cadence of the bicycle includes receiving, by the processor, cadence data from a sensor of the bicycle. The sensor is in communication with the processor. Determining the cadence of the bicycle also includes determining the cadence of the bicycle based on the received cadence data.

In one example, the predetermined threshold cadence is a first predetermined threshold cadence. The method further includes identifying the deactivation condition is met. Identifying the deactivation condition is met includes identifying, by the processor, a highest gear is reached, determining, by the processor, the cadence of the bicycle is below a second predetermined threshold cadence for a predetermined amount of time, determining, by the processor, a power output of the bicycle and determining, by the processor, the power output is below a predetermined threshold power, identifying actuation of an input device of the bicycle for a predetermined amount of time, or any combination thereof. The input device is in communication with the processor.

In one example, the outboard shift is a first outboard shift. The method further includes determining, by the processor, an amount of time or a number of chain links passed since the initiating of the outboard shift of the bicycle. The method further includes initiating, by the processor, a second outboard shift of the bicycle when, based on the repeated determining of the cadence of the bicycle and the repeated comparing of the determined cadence of the bicycle to the predetermined threshold cadence, the determined cadence is greater than or equal to the predetermined threshold cadence. The method further includes comparing the determined amount of time to a predetermined amount of time or comparing the determined number of chain links to a predetermined number of chain links, and pausing the second outboard shift when, based on the comparing of the determined amount of time to the predetermined amount of time or the comparing of the determined number of chain links to the predetermined number of chain links, the determined amount of time is less than the predetermined amount of time or the determined number of chain links is less than the predetermined number of chain links.

In one example, the bicycle is an electric bicycle. The electric bicycle is an assist motor. The method further includes adjusting the assist motor of the electric bicycle from a first power setting to a second power setting after the entering of the automatic shifting mode of the electric bicycle. The second power setting is a maximum power setting. The method further includes adjusting the assist motor of the electric bicycle from the second power setting to the first power setting after the deactivation condition is met.

In one example, the bicycle includes an electronic suspension system. The electronic suspension system includes a suspension component. The method further includes adjusting damping of the suspension component from a first damping setting to a second damping setting after the entering of the automatic shifting mode of the electric bicycle. The second damping setting is greater than the first damping setting. The method further includes adjusting the damping of the suspension component from the second damping setting to the first damping setting after the deactivation condition is met.

In one example, an electronic component of a bicycle includes a processor configured to identify a first gear shift command. A source of the first gear shift command is the processor. The processor is further configured to determine a first shift direction based on the first gear shift command, initiate a shift of the bicycle in the first shift direction, from a first gear to a second gear, based on the first gear shift command, and identify a second gear shift command. A source of the second gear shift command is a control device of the bicycle. The second gear shift command is after the first gear shift command. The processor is further configured to determine a time period between the identification of the first gear shift command and the identification of the second gear shift command. The processor is further configured to compare the determined time period to a predetermined time period and control the electronic shifting of the bicycle, such that the bicycle shifts in a second direction, at least back to the first gear, when, based on the comparison, the determined time period is less than the predetermined time period. The second direction is opposite the first direction.

In one example, the electronic component is a rear derailleur.

### Brief Description of the Drawings

Objects, features, and advantages of the present invention will become apparent upon reading the following description in conjunction with the drawing figures, in which:
FIG. 1 is a side view of one example of a bicycle with automatic shifting that may be controlled in accordance with the teachings of this disclosure;
FIG. 2 is a side view of one example of a rear derailleur;
FIG. 3 is a flow chart of an embodiment of a method for controlling a bicycle;
FIG. 4 is a flow chart of an embodiment of a method for modifying an automatic shifting mode;
FIG. 5 is a flow chart of the method of FIG. 4, illustrating different user interaction scenarios;
FIG. 6 is a flow chart of another embodiment of a method for modifying an automatic shifting mode;
FIG. 7 is a block diagram of an exemplary bicycle control system for implementing methods of controlling a bicycle; and
FIG. 8 is a block diagram of an exemplary control device for use in implementing methods of controlling a bicycle.

Other aspects and advantages of the embodiments disclosed herein will become apparent upon consideration of the following detailed description, wherein similar or identical structures have similar reference numerals.

### Detailed Description of the Disclosure

For bicycle transmissions that utilize electronic shifting, as cadence increases, a controller running an automatic shifting algorithm initiates a gear shift from a first gear to a second gear when the cadence is outside of a cadence band. Standard operation of the automatic shifting algorithm may be altered in a number of ways.

For example, user input at one of two buttons of a controller of a state of the art bicycle may override automatic shifting executed by the automatic shifting algorithm. For example, a rider of the bicycle may interact with one of the two buttons to override the automatic shifting and execute an outboard shift, and may interact with the other of the two buttons to override the automatic shifting and execute an inboard shift.

Use of the two buttons for automatic shifting override may be confusing to the rider and may not be intuitive in technical riding situations. Further, using two buttons on a handlebar of the bicycle for manual override complicates the addition of more functions for buttons on the handlebar.

According to the present disclosure, a single button is used as a correctional device for the automatic shifting algorithm. A processor of the bicycle identifies an automatic shift as part of the automatic shifting algorithm, and determines a direction of the identified automatic shift (e.g., inboard or outboard). The processor may receive a gear shift command generated in response to user input at an input device (e.g., a button) of the bicycle after the identification of the automatic shift. The processor determines whether the received gear shift command is a gear shift correction generated by the rider.

For example, the processor determines whether the gear shift command (e.g., generated in response to the user input) is received within a first predetermined amount of time (e.g., 1.5 s) after the identification of the automatic shift. The processor identifies the received gear shift command as a gear shift correction when the processor determines the gear shift command is received within the predefined amount of time after the identification of the automatic shift. In one embodiment, the processor also determines whether the gear shift command generated in response to the user input is received at least a second predetermined amount of time after the identification of the automatic shift, for example, to provide that the rider was not anticipating a shift. In other words, the processor identifies the received gear shift command as a gear shift correction when the gear shift command is received within a predetermined time range after the identification of the automatic shift (e.g., an amount of time greater than the second predetermined amount of time but less than the first predetermined amount of time).

When the processor determines the gear shift command is a gear shift correction, the processor initiates a gear shift in a direction opposite of the determined direction of the identified automatic shift. For example, when the determined direction of the identified automatic shift is inboard, the processor initiates an outboard shift, and when the determined direction of the identified automatic shift is outboard, the processor initiates an inboard shift. The same input device (e.g., single button) is used for inboard and outboard gear shift correction, which reduces confusion for the rider and is more intuitive.

In one embodiment, the gear shift correction may do more than just correct the identified automatic shift. For example, in response to the gear shift command being received within the first predetermined amount of time after the identification of the automatic shift, for example, the processor may initiate a gear shift in a direction opposite of the determined direction of the identified automatic shift, of two or more gears (e.g., two gears). For example, when the determined direction of the identified automatic shift is inboard, the processor initiates an outboard shift of two gears, and when the determined direction of the identified automatic shift is outboard, the processor initiates an inboard shift of two gears.

In another embodiment, the gear shift correction is not undone by the automatic shifting algorithm for a predetermined amount of time. In other words, the automatic shifting algorithm is paused for a predetermined amount of time to allow the gear shift correction to be executed. The processor may only allow shifts in a same direction as the gear shift correction (e.g., in response to additional input by the rider at the input device) for the predetermined amount of time.

In yet another embodiment, user input may be used to change a target cadence of the automatic shifting algorithm. For example, the target cadence may be adjusted up or down based on a direction of the automatic shift that is overridden. For example, if the automatic shifting algorithm initiates an outboard shift when a measured cadence reaches or exceeds an upper cadence limit of a cadence range (e.g., determined based on a target cadence) and the processor receives a gear shift command determined to be a gear shift correction, the processor may increase the target cadence (e.g., by a predetermined amount) automatically or in response to a user input. As another example, if the automatic shifting algorithm initiates an inboard shift when a measured cadence reaches or drops below a lower cadence limit and the processor receives a gear shift command determined to be a gear shift correction, the processor may decrease the target cadence (e.g., by a predetermined amount) automatically or in response to a user input.

As another example, in downhill mountain biking, cross-country racing, sprints in road racing, or for everyday riders starting from a red light, riders sprinting from a stop position may start in a large gear and/or relieve a grip of the handlebar to shift. Manually shifting may require partial relief of a grip of the handlebar by the rider, which is detrimental to all-out-power output and control of the bicycle. In competitive racing, for example, where fractions of a second may decide the winner of a race, this is a disadvantage. Further, manual shifting during such an all-out-power scenario may lead to accidentally executing multiple shifts at once, which increases the risk of chain failure. The risk of accidental multi-shifts is also high while riding through rough terrain.

According to the present disclosure, the rider may manually enter a mode for automatic outboard shifting (e.g., launch control mode) before or within a sprint scenario. The launch control mode automatically deactivates once one or more defined conditions indicating the sprint scenario is complete have been reached.

Standing in a start gate, at a red light, or just before accelerating for a sprint in a road race, for example, the rider may activate the launch control mode. The rider may activate the launch control mode by, for example, interacting with an input device (e.g., a button) of the bicycle.

Once starting to sprint, a processor of the bicycle may instruct an electronic rear derailleur of the bicycle to execute an outboard shift when the processor determines a predefined cadence of a crank arm of the bicycle has been reached. The processor may receive cadence data from one or more sensors (e.g., a cadence sensor and/or a power meter), to determine a cadence of the crank arm based on the received cadence data, and compare the determined cadence to the predefined cadence to determine when the predefined cadence of the crank arm has been reached.

Since during the sprint scenario, velocity of the bicycle and, therefore, cadence of the crank arm will increase between a time a shift command is sent and a time the outboard shift is complete, the processor may predictively time the shift command, so that a predetermined threshold cadence is not reached (e.g., the upper cadence limit). Timing of the shift command (e.g., generating and/or sending the shift command) may be determined based on cadence, power, wheel speed, a derivative of the cadence, a derivative of the power, a derivative of the wheel speed, information on cog size, a number and distribution of shift ramps on a cassette of the bicycle, or any combination thereof.

The processor may instruct the electronic rear derailleur of the bicycle to execute an outboard shift multiple times depending on a length of a sprint. In other words, after an automatic outboard shift (e.g., a first automatic outboard shift), when the predefined cadence of the crank arm is again reached, the processor may instruct the electronic rear derailleur of the bicycle to execute another outboard shift (e.g., a second automatic outboard shift). In one embodiment, the processor may use a time delay for subsequent outboard shift, so that a multi-shift is avoided. For example, the second automatic outboard shift may be delayed if the second automatic outboard shift is initiated before the first outboard shift is completed.

The time delay may, for example, be a fixed time interval and/or a fixed number of chain links needed to pass before a next shift (e.g., the second automatic outboard shift) is executed. The fixed time interval and the fixed number of chain links may be determined based on cadence, power, wheel speed, a derivative of the cadence, a derivative of the power, a derivative of the wheel speed, information on cog size, information on chainring size, a number and distribution of shift ramps on a cassette of the bicycle, or any combination thereof.

The processor may automatically deactivate the launch control mode when one or more deactivation conditions (e.g., a deactivation condition) are met. For example, the launch control mode is deactivated when the rider stops pedaling (e.g., the determined cadence is approximately zero, such as less than 1 or 2 RPM, for a predetermined amount of time), a power output drops below a predefined minimum power threshold, or the rider manually executes an inboard shift.

In one embodiment, the bicycle is an electric bicycle, and the launch control mode may be used with an assist motor of the electric bicycle. In addition to the automatic outboard shifting, the processor may, within the launch control mode, also switch the assist motor to a maximum power setting when the launch control mode is entered, and switch the assist motor back to a previously selected power mode once the deactivation condition is met or once the electric bicycle reaches a maximum threshold speed (e.g., a government mandated maximum speed of an electric bicycle).

A system control device may be configured so as to be integrated, or coupled, with a bicycle to control bicycle components. The system control device may interface with electromechanically controlled bicycle components so as to trigger an action, such as shifting a rear gear. The system control device may include instructions configured to cause the electromechanically controlled bicycle components to shift between gears automatically (e.g., without specific input or prompting from a rider of the bicycle) based on rider established, or otherwise determined, thresholds, values, parameters, and/or readings from one or more sensors of the bicycle configured to detect characteristics of the bicycle.

These and other objects, features, and advantages of the disclosed bicycle component control will become apparent to those having ordinary skill in the art upon reading this disclosure. Throughout the drawing figures, where like reference numbers are used, the like reference numbers represent the same or substantially similar parts among the various disclosed examples. Also, specific examples are disclosed and described herein that utilize specific combinations of the disclosed aspects, features, and components of the disclosure. However, it is possible that each disclosed aspect, feature, and/or component of the disclosure may, in other examples not disclosed or described herein, be used independent of or in different combinations with other of the aspects, features, and components of the disclosure.

Various embodiments of the invention will be described herein with reference to the drawings. It will be understood that the drawings and the description set out herein are provided for illustration only and do not limit the invention as defined by the claims appended hereto and any and all their equivalents. For example, the terms "first" and "second", "front" and "rear", "left" and "right" are used for the sake of clarity and not as terms of limitation. Moreover, the terms refer to bicycle mechanisms conventionally mounted to a bicycle and with the bicycle orientated and used in a standard fashion unless otherwise indicated.

It is to be understood that the specific arrangement and illustrated components of the frame, front wheel, rear wheel, drivetrain, front brake, rear brake, and saddle are non-limiting to the disclosed embodiments. For example, while the front brake and the rear brake are illustrated as hydraulic rim brakes, hydraulic disc brakes are contemplated and encompassed within the scope of the disclosure. Additionally, mechanical systems including mechanical rim brakes and mechanical disk brakes, as well as other electronic, hydraulic, pneumatic, and mechanical systems, or combinations thereof, such as suspension systems, are contemplated and encompassed within the scope of the present disclosure.

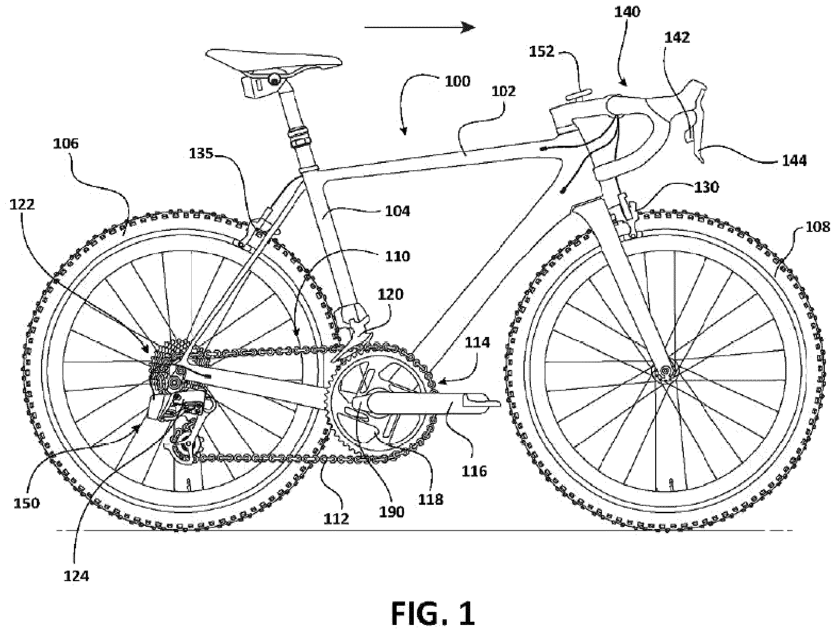

Figure 1 generally illustrates a bicycle 100 with which one or more system control devices 150 may be used to implement a bicycle control system using the methods described herein. The bicycle 100 includes a frame 102, front and rear wheels 108, 106 rotatably attached to the frame 102, and a drivetrain 110. A front brake 130 is provided for braking the front wheel 108, and a rear brake 135 is provided for braking the rear wheel 106. The drivetrain 110 includes a chain 112, a front crank assembly 114 including a crank 116, one or more chainrings 118, a front derailleur 120 that may be attached to a seat tube 104 or another portion of the frame 102, a rear sprocket assembly 122 coaxially mounted to the rear wheel 106 and a rear derailleur 124. In the displayed embodiment, the drivetrain 110 involves electro-mechanical operation of the front derailleur 120 and/or the rear derailleur 124. In an embodiment, the drivetrain 110 may involve only a single front chainring 118, and may thus not include the front derailleur 120.

A handlebar assembly 140 is attached to the frame 102 for user, or rider, control of the bicycle 100. The handlebar assembly 140 may include a manual shift control device 142. One or more manual shift control devices 142 (e.g., buttons or levers) may be used with the bicycle 100. The manual shift control devices 142 are configured to actuate or otherwise control components of the bicycle 100. For example, the manual shift control device may be configured to control gear shifting of the front derailleur 120 and/or the rear derailleur 124. The manual control devices may also be configured to control characteristics of a suspension system (not shown). The handlebar assembly 140 may also include a brake lever 144 that is configured to operate the front brake 130. The rear brake 135 is operated by a brake lever (not shown) also located on the handlebar assembly 140.

The bicycle 100 may also include one or more cadence sensors and/or power meters. As shown in the example of FIG. 1, a device 190 includes a cadence sensor integrated into a power meter. In other embodiments, the cadence sensor and the power meter are separate devices. Cadence may be measured directly from the crank 116 and/or determined from the known gear, wheel size, speed of the bike during pedaling, or using other techniques. A separate power meter may be crank based, chainring spider based, hub based, or any type of power meter operational to provide an indication of the power input and/or output of the bicycle 100. A speed sensor may also be included. The speed sensor may be a wheel speed sensor, a global positioning system device, or any other type.

The manual shift control devices 142 are part of a bicycle control system, or control system, that includes a system control device 150 configured for causing the rear 124 and/or front derailleur 120 to shift between gearing combinations of the bicycle 100 using manual control as described above, or through automatic control based on user defined values and/or bicycle sensor readings of bicycle characteristics. As shown in FIG. 1, the system control device 150 is integrated into the rear derailleur 124. The system control device 150, however, may be integrated with other components, such as the manual control device(s) 142, as a standalone device, or combinations thereof using parallel and/or joint processing techniques. For example, the system control device 150 may be integrated with, or configured to control, one or more internal gear hubs of a drivetrain of a bicycle.

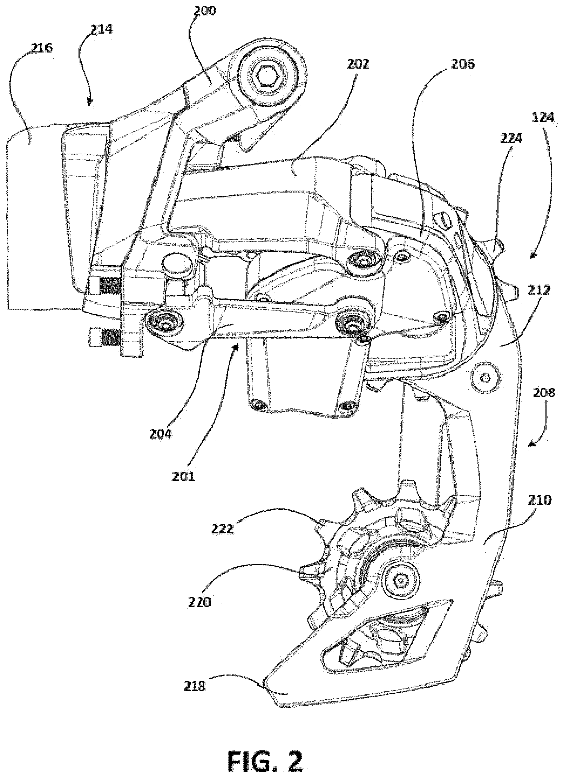

Referring to FIG. 2, the rear derailleur 124 is depicted in these examples as a wireless, electrically actuated rear derailleur mountable to the frame 102 of the bicycle 100. The electric rear derailleur 124 has a base member 200 (e.g., a b-knuckle) that is mountable to the bicycle frame 102. A linkage 201 has two links, an outer link 202 and an inner link 204, that are pivotally connected to the base member 200. A movable member 206 (e.g., a p-knuckle) is connected to the linkage 201. A chain guide assembly 208 (e.g., a cage) has a cage plate 210 with a proximal end 212 that is pivotally connected to a part of the movable member 206, as described further below.

A motor module 214 is carried on the electric rear derailleur 124 and has a battery 216. The battery 216 supplies power to the motor module 214. In one example, as illustrated in FIG. 2, the motor module 214 is located in the base member 200. However, the motor module 214 may instead be located elsewhere, such as in the outer link 202 or the inner line 204, or in the movable member 206. The motor module 214 may include, though not shown herein, a gear mechanism or transmission. As is known in the art, the motor module 214 and gear mechanism may be coupled with the linkage 201 to laterally move the cage plate 210 and thus switch the chain 112 among the rear sprockets on the rear sprocket assembly 122.

The cage plate 210 also has a distal end 218 that carries a tensioner cog or wheel 220 (e.g., a tensioner wheel). The tensioner wheel 220 also has teeth 222 around a circumference. The cage plate 210 is biased in a chain tensioning direction to maintain tension in the chain 112. The chain guide assembly 208 may also include a second cog or wheel, such as a guide wheel 224 disposed nearer the proximal end 212 of the cage plate 210 and the movable member 206. In operation, the chain 112 is routed around one of the rear sprockets. An upper segment of the chain 112 extends forward to the chainring 118 or a front sprocket assembly and is routed around one or the front sprocket. A lower segment of the chain 112 returns from the chainring 118 or the front sprocket assembly to the tensioner wheel 220 and is then routed forward to the guide wheel 224. The guide wheel 224 directs the chain 112 to the rear sprockets. Lateral movement of the cage plate 210, the tensioner wheel 220, and the guide wheel 224 may determine the lateral position of the chain 112 for alignment with a selected one of the rear sprockets.

Referring to FIG. 1, a control unit 152 may be mounted to the handlebar assembly 140 for actuating the motor module 214 and operating the rear derailleur 124 for executing gear changes and gear selection. The control unit 152, however, may be located anywhere on the bicycle 100 or, alternatively, may be distributed among various components of the bicycle 100, with routing of a communication link to accommodate necessary signal and power paths. The control unit 152 may also be located other than on the bicycle 100, such as, for example, on a rider's wrist or in a jersey pocket. The communication link may include wires, may be wireless, or may be a combination thereof. In one example, the control unit 152 may be integrated with the rear derailleur 124 to communicate control commands between components. The control unit 152 may include a processor, a memory, and one or more communication interfaces.

The battery 216 may instead be an alternate power supply or power source and may operate other electric components of the bicycle 100 within a linked system. The battery 216 or other power supply may also be located in other positions, such as attached to the frame 102. Further, multiple power supplies may be provided, which may collectively or individually power the electric components of the system, including the rear derailleur 124, such as a drive motor for an embodiment involving an electrically powered bicycle. In this example, however, the battery 216 is configured to be attached directly to the rear derailleur 124, and to provide power only to the components of the rear derailleur 124.

While the illustrated bicycle 100 is a road bike, the present invention has applications to bicycles of any type, including fully or partially suspensioned mountain bikes and others, as well as bicycles with mechanical (e.g., cable, hydraulic, pneumatic) and non-mechanical (e.g., wired, wireless) drive systems. For example, the illustrated handlebar assembly 140 involves a drop bar configuration; however, the shift control device 142 and/or bicycle control system may be used with other types of handlebar assemblies as well, such as aero-bars, bullhorn bars, riser bars, or any other type of bicycle handlebar. For example, the shift control device 142 may be a button integrated with an aero-bar configuration. Also, while the embodiments described herein describe manual control devices attached to handlebars, a person having experience in the art would recognize the possible positioning of control devices at other areas of a bicycle, such as locations throughout the frame 102 or other locations.

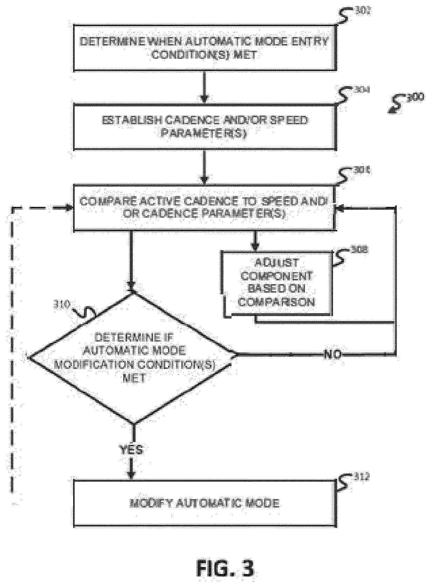

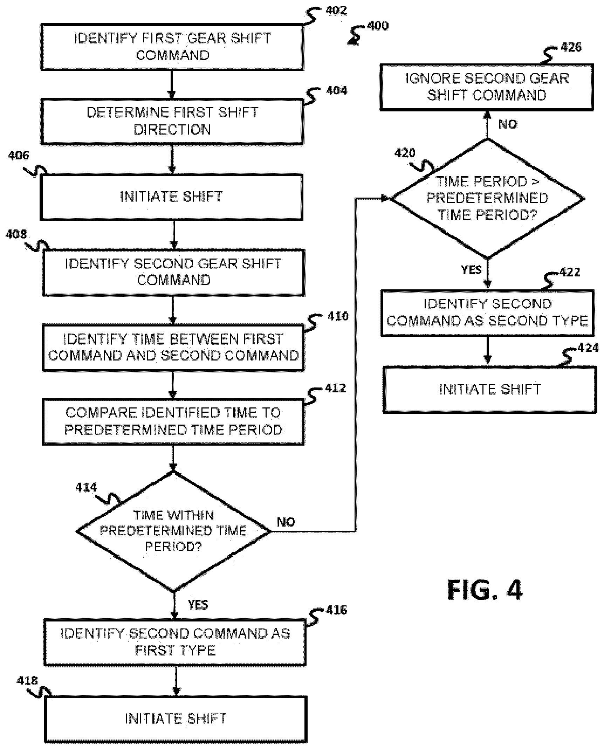

FIG. 3 illustrates a flow chart of an embodiment for a method 300 of controlling a bicycle, particularly as related to an automatic, or automatic shifting, mode of a bicycle and/or bicycle component(s). FIG. 4 illustrates a flow chart of an embodiment of a method 400 for controlling an automatic shifting mode of a bicycle. As presented in the following, acts may be performed using any combination of the components indicated in FIGS. 1, 2, 7, and/or 8. For example, the following acts may be performed by a processor, as integrated with a system control device 150 that may be integrated with one or more bicycle components 124 and/or 120. Additional, different, or fewer acts may be provided. The acts are performed in the order shown or other orders. The acts may also be repeated and/or performed at multiple times throughout the method. For example, a cadence band for control of electronic shifting may be adjusted each time a new gear shift command is identified.

An automatic shifting system may be configured, such as with appropriate sensors or other devices, to monitor and/or detect system parameters to be used for system control. For example, the automatic shifting system may use one or more of cadence, power, and/or speed measurement to control shifting of the transmission.

Some initial parameters that may, for example, be established include any combination of the following. Cadence is a rotation of the cranks as measured in, for example, revolutions per minute ("RPM"). Default cadence or nominal cadence is a preferred cadence established by, for example, the rider. The default cadence may be established by the rider during or prior to riding. A cadence band is a set range of cadences where the system will stay within a same gear. The cadence band may include an upper cadence limit and/or a lower cadence limit. The system may shift outboard (e.g., to a harder gear) when the measured cadence is higher than the upper cadence limit and may shift inboard (e.g., to an easier gear) when the measured cadence is lower than the lower cadence limit.

The parameters are used, either independently or in combination, by the system control device 150 to control the automatic shifting system of the bicycle 100, for example as is indicated in the flow charts provided in FIGS. 3-6.

In act 302, the system control device determines if one or more automatic mode entry conditions are met. The automatic mode entry conditions may be any criteria operable to indicate an intent to enter an automatic mode of a component of the bicycle. In an embodiment, one or more buttons may be enacted (e.g., depressed or actuated) for a period of time. The buttons may be multiple purpose buttons, such as electronic shifting devices, configured as levers, plunger type buttons, rocker type buttons, or any other electronic actuation device. For example, the buttons may be typically used to indicate that a component, such as one or more bicycle derailleurs, is to shift a chain of the bicycle 100 to a different gear, but when actuated in combination for at least three seconds, the system control device causes the component to enter into automatic mode. Other actuation time periods and/or other multi-purpose button based initiation techniques may also be used. For example, multiple system control buttons may be provided, such as manual shift control devices for electronic derailleurs.

In an embodiment, individual buttons of the multi-purpose buttons may have three or more actuating effects. In an embodiment, at least one button is provided for controlling a rear derailleur of a bicycle. A first button actuated (e.g., in a first direction) causes a rear derailleur to change the bicycle chain to a larger sized sprocket. The first button actuated in a second way (e.g., in a second direction) or a second button actuated independently causes the rear derailleur to change the bicycle chain to a smaller sized sprocket. The first button and/or the second button actuated for a length of time causes the system control device to enter into an automatic shifting mode. For example, the length of time may be three seconds. In an embodiment, the first button and/or the second button may provide a button release signal when the respective button is released by a user, and the absence of a button release signal within a period of time may trigger entry into an automatic shifting mode of the system control device.

In another embodiment, a bicycle speed may be monitored by the system control device using a speed determination device, such as a wheel speed sensor. When the system control device determines that the bicycle speed, such as is indicated by a wheel speed in this example, is above a minimum value, the system control device causes the component to enter into automatic mode.

In act 304, cadence and/or speed parameters are established. The cadence and/or speed parameters may be established using any technique. The speed and/or cadence parameters are used by the system control device to determine when an automatic adjustment, such as a shift using a derailleur, is to be enacted. In an embodiment, one or more cadence parameters are determined by the system control device using a cadence sensor. The system control device measures a cadence of the bicycle for a period of time, and establishes a value derived from the measured cadence over that time as the cadence parameter. The derived value may be any value characteristic of the cadence over the period of time. For example, the derived value may be an average, mode, or mean value for the cadence over the period of time. Also, the period of time may be an established or referenced period of time. In an embodiment, the period of time is equal to a period of time a button is actuated. For example, if two buttons are actuated for three seconds to cause the system control device to enter into an automatic mode, the system control device records values using the cadence sensor, during the time the two buttons are actuated to gather data for deriving the cadence value to establish.

In an embodiment, the system control device gathers cadence data over a period of time and determines multiple values, such as a mean and a standard deviation of the cadence over that time. The mean value and the standard deviation value may be used to establish an operations range for the automatic mode. For example, the upper cadence limit and the lower cadence limit may be established from the mean value and the standard deviation value to determine characteristics of automatic shifting mode shifts. The upper cadence limit and the lower cadence limit may also be determined using other techniques. For example, an average cadence may be determined over a period of time; the upper cadence limit may be established as a pre-set cadence value higher than the average cadence, and the lower cadence limit may be established as a pre-set cadence value lower than the average cadence. The preset values may be the same or different for the setting of the upper cadence limit and the lower cadence limit.

In another embodiment, one or more predetermined cadence parameters are saved in a memory of the system control device, and the one or more predetermined cadence parameters are established as the cadence and/or speed parameters. For example, a set of an upper cadence limit and a lower cadence limit may be manually input into the memory before riding or may be stored in the memory during riding (e.g., a prior bicycle ride) of the system control device.

In act 306, the system control device compares active cadence and/or speed parameters to cadence and/or speed parameters established in act 304. The comparison may be executed using any technique that may qualify an active cadence and/or speed of the bicycle against the established cadence and/or speed parameters. In an embodiment, a current measured speed and/or cadence value is compared to the upper cadence limit and the lower cadence limit established in act 304. For example, the upper cadence limit and the lower cadence limit may be established in act 304, and a trailing time average of cadence values recorded for a period of time (e.g., the last one second) may be compared against the upper cadence limit and the lower cadence limit. In other words, the system control device may determine whether the trailing time average of cadence values is within a predetermined cadence band defined by the upper cadence limit and the lower cadence limit, and if the trailing time average of cadence values is outside the predetermined cadence band, determine whether the trailing time average of cadence values is greater than the upper cadence limit or less than the lower cadence limit. This comparison may be repeated periodically or conducted continuously by the system control device during automatic mode operation.

In act 308, the system control device adjusts a component based on the comparison performed in act 306. In an embodiment, the system control device causes the rear derailleur to change a gear of the bicycle based on the comparison performed in act 306. For example, the system control device shifts to an easier gear (e.g., inboard) when a detected cadence reaches and/or goes below the lower cadence limit, and/or the system control device shifts to a harder gear (e.g., outboard) when the detected cadence reaches and/or goes above the upper cadence limit.

In act 310, the system control device determines if one or more automatic mode modification conditions (e.g., identification of a gear shift command) are met. Automatic mode modification conditions are conditions that when met trigger an altering or change of an operating parameter of the automatic mode. In an embodiment, the automatic mode modification conditions are conditions that, when met subsequent to the establishment of cadence and/or speed parameters in act 304, trigger an altering or change of the operating parameter of the automatic mode. In an embodiment, multiple automatic mode modification conditions are used to alter or change the operating parameters of the automatic mode. Further, detecting and/or determining the multiple modification conditions (act 310), and subsequent modification of automatic mode (act 312), as described further below, may occur at different positions of the indicated sequence. For example, the determining and/or modifying may occur after the establishment of the cadence and/or speed parameters (act 304), but before the comparing of the active cadence and/or speed (act 306).

Different actions and/or measured values may be an automatic mode modification condition. In an embodiment, operating a manual control that is not necessary for automatic mode may be an automatic mode modification. For example, a button depression, such as a depression of a shifting multi-use button described above, may be an automatic mode modification condition. While the system control device is operating in automatic mode (e.g., causing at least one bicycle shifting component to shift gears based on cadence and/or speed parameters), there is no need to manually depress a shifting button to indicate a shift. A manual shift button depression during the automatic mode operation may be interpreted as indicating intent to change a parameter of the automatic mode, such as the system control device disengaging or pausing automatic mode.

Other actions and/or measured values may be automatic mode modification conditions. In an embodiment, one or more cadence values are automatic mode modification conditions. For example, a cadence sensor, such as a crank or crank arm sensor, may be used to provide a bicycle cadence to the system control device, and when the cadence value indicated by the cadence sensor drops below the lower cadence limit or rises above the upper cadence limit (e.g., initiating a gear change within the automatic mode), this measured value or initiated action (e.g., gear change) may be an automatic mode modification condition.

In act 312, the control device modifies the automatic mode of the component based on the determination in act 310. The modification may be to any modification to the automatic mode (e.g., a modification to an operational parameter of the automatic mode). For example, the modification may be a correction of an automatic shift, a modification to a time between automatic shifts, to the upper cadence limit and/or the lower cadence limit, limiting of a direction in which the bicycle may shift, or other modifications. In an embodiment, a modification condition involving a depression of a shift button during automatic mode operation may cause the system control device to increase the upper cadence limit and/or decrease the lower cadence limit.

In an embodiment, a modification condition involving a slow speed during automatic mode operation may cause the system control device to pause or end the automatic mode operation. In an embodiment, a modification condition involving a slow cadence during automatic mode operation may cause the system control device to pause or end the automatic mode operation. Any parameter described herein may be modified based on the determination and/or detection of any particular modification condition described herein.

In an embodiment, subsequent to, or concurrent with, modifying an automatic mode parameter (act 312), the system control device continues to operate in the automatic mode with the modified parameters.

Further description of the provided functions, automatic mode parameters, modification conditions, and other embodiments of the control system are described below. These functions, automatic mode parameters, and modification conditions may be implemented in an embodiment in any combination or as specifically described herein.

FIG. 4 illustrates a flow chart for an embodiment of a method 400 for modifying an automatic shifting mode. For example, the method 400 may identify a user input as a gear shift correction (e.g., a correction) and at least correct (e.g., override) an automatic shift of the automatic shifting mode. As presented in the following sections, the acts may be performed using any combination of the components indicated in previous figures. For example, the following acts may be performed by at least some components of a bicycle control system 700 and/or a control system 800, as well as additional or other components. In an embodiment, the acts may be performed by, for example, the system control device 150, a bicycle component 708A (e.g., a processor of the rear derailleur 124), another processor, another component of the bicycle, or any combination thereof. Additional, different, or fewer acts may be provided. The acts are performed in the order shown or in other orders. The acts may be repeated.

Prior to the method 400 shown in FIG. 4, an instantaneous cadence may be set, or established, upon starting or initiating automatic mode. In the embodiment, automatic shifting starts with pushing or otherwise actuating an up shift button and/or a down shift button for a period of time, such as three seconds. This time is variable and may be anything longer than a normal shift time. The system control device records the cadence of the rider during the three seconds, for example. The system control device sets the upper cadence limit and the lower cadence limit (e.g., a cadence band and a cadence range). The cadence is measured and compared with the cadence band, and the system control device may shift gears based on the comparison (e.g., if the measured cadence is outside of the cadence band).

In act 402, a processor of the bicycle (e.g., the processor of the rear derailleur 124 or a processor of the system control device 150) identifies a first gear shift command. The processor or another processor is a source of the first gear shift command. In one embodiment, the processor is a processor of a rear derailleur, and the processor of the rear derailleur identifying the first gear shift command includes the processor of the rear derailleur generating the first gear shift command as part of an automatic shifting mode of the bicycle (e.g., according to the method 300 of FIG. 3). In other words, the processor of the rear derailleur determines, as part of the automatic shifting mode, the active cadence (e.g., as determined by one or more sensors) is outside of a predetermined cadence band and generates the first gear shift command in response to this determination. In another embodiment, the processor is the processor of a system controller (e.g., the system control device 150) and identifies (e.g., receives) the first gear shift command generated by another processor of the bicycle (e.g., the processor of the rear derailleur) as part of the automatic shifting mode of the bicycle.

In act 404, the processor determines a first shift direction based on the first gear shift command. For example, the first gear shift command may include data representing a shift direction and a number of shifts, and the processor may determine the first shift direction based on the data included within the first gear shift command identified in act 402.

For example, when the processor determines the active cadence is greater than an upper cadence limit of the predetermined cadence band, the processor may determine, as part of the automatic shifting mode of the bicycle, a shift to a harder outboard gear is needed. In other words, the processor may generate the first gear shift command, including data identifying an outboard shift direction and a shift of one cog, when the processor determines the active cadence is greater than the upper cadence limit of the predetermined cadence band. As another example, when the processor determines the active cadence is less than a lower cadence limit of the predetermined cadence band, the processor may determine, as part of the automatic shifting mode of the bicycle, a shift to an easier inboard gear is needed. In other words, the processor may generate the first gear shift command, including data identifying an inboard shift direction and a shift of one cog, when the processor determines the active cadence is less than the lower cadence limit of the predetermined cadence band.

In act 406, the processor initiates a shift of the bicycle in the first shift direction, from a first gear (e.g., a first cog) to a second gear (e.g., a second cog), based on the first gear shift command. The processor may initiate the shift of the bicycle based on the data (e.g., representing the shift direction and the number of shifts) included within the first gear shift command. The first shift direction may be the outboard direction or the inboard direction. The first gear and the second gear may be adjacent cogs of a rear cassette of the bicycle (e.g., the rear sprocket assembly 122).

In one embodiment, the processor identifies a time at which the processor identifies the first gear shift command in act 402 and/or a time at which the processor initiates the shift of the bicycle in act 406 (e.g., a first time point). The processor may store the first time point in a memory of the bicycle (e.g., a memory of the rear derailleur 124 or a memory of the system control device 150). In another embodiment, the processor starts a timer when the processor identifies the first gear shift command in act 402 or when the processor initiates the shift of the bicycle in act 406.

In act 408, the processor identifies a second gear shift command. A source of the second gear shift command is a control device of the bicycle. The second gear shift command is after the first gear shift command. For example, the processor identifies the second gear shift command in act 408 after the processor initiates the shift of the bicycle in act 406.

The processor identifying the second gear shift command includes the processor receiving the second gear shift command from the control device of the bicycle in response to a user input at an input device of the control device of the bicycle. For example, the control device of the bicycle may be a shifting device (e.g., a manual shift control device of the one or more manual shift control devices 142). The shifting device may include one or more input devices (e.g., a lever and/or a button), and a rider may interact with an input device of the one or more input device of the shifting device (e.g., the user input) after the processor initiates the shift of the bicycle in the first shift direction in act 406. In one embodiment, the shifting device includes only one input device. The shifting device may generate the second gear shift command in response to the user input, and transmit the second gear shift command to the processor.

The second gear shift command may include any number of different types of data. For example, the second gear shift command may include data identifying the shifting device, a time length of the user input (e.g., how long the rider interacts with the input device), a time at which the shifting device generates the second gear shift command in response to the user input, and/or other types of data.

In one embodiment, the processor identifies a time at which the shifting device generates the second gear shift command and/or a time at which the processor receives the second gear shift command (e.g., a second time point). The processor may store the second time point in the memory of the bicycle or another memory. In another embodiment, the processor ends the timer started, for example, in act 406.

In act 410, the processor determines a time period between the identifying of the first gear shift command in act 402 and the identifying of the second gear shift command in act 408. In one embodiment, the processor determines the time period by determining a difference between the second time point determined in act 408 and the first time point determined in act 406. For example, the processor may identify the second time point and the first time point stored in the memory of the bicycle. In another embodiment, the processor may determine the time period based on the timer started in act 406 and ended in act 408. The processor may determine the time period in other ways. For example, the processor may determine the time period based on timestamps included within the first gear shift command and the second gear shift command, respectively.

In one embodiment, the determined time period may be a time period between the generation of the first gear shift command (e.g., by the processor) and the generation of the second gear shift command (e.g., by the control device). In another embodiment, the determined time period may be a time period between the generation of the first gear shift command (e.g., by the processor) and the receipt of the second gear shift command (e.g., by the processor). Other time periods may be determined.

In act 412, the processor compares the time period determined in act 410 to a predetermined time period (e.g., a first predetermined time period). For example, the processor may, based on the comparison, determine whether the time period determined in act 410 is less than, equal to, or greater than the first predetermined time period.

The first predetermined time period may be stored in the memory or another memory, and the processor may identify the stored first predetermined time period. The first predetermined time period may represent a time period within which the user input at the control device is identified as a gear shift correction. The first predetermined time period may be any number of different periods of time. For example, the first predetermined time period may be 1.0 s, 1.5 s, 2.0 s, 2.5 s, or another time period.

In one embodiment, the processor may also compare the time period determined in act 410 to another predetermined time period (e.g., a second predetermined time period). The processor may, based on the comparison of the time period determined in act 410 to the second predetermined time period, determine whether the time period determined in act 410 is less than, equal to, or greater than, the second predetermined time period.

The second predetermined time period may be stored in the memory or another memory, and the processor may identify the stored second predetermined time period. The bicycle may have a minimum time after an automatic shift (e.g., the first gear shift command) until the user input is identified as a gear shift correction to provide that the rider was not anticipating the shift. The second predetermined time period may correspond to a reaction time. The second predetermined time period may be any number of different time periods that are less than the first predetermined time period. For example, the second predetermined time period may be 0.5 s, 0.75 s, 1.0 s, or another time period.

In act 414, the processor determines, based on the comparison, in act 412, of the time period determined in act 410 to the first predetermined time period, whether the time period determined in act 410 is less than (e.g., or equal to) the first predetermined time period. In one embodiment, the processor also determines, based on the comparison, in act 412, of the time period determined in act 410 to the second predetermined time period, whether the time period determined in act 410 is greater than (e.g., or equal to) the second predetermined time period.

When, in act 414, the processor determines the time period determined in act 410 is, for example, less than the first predetermined time period, the method 400 moves to act 416. Otherwise, the method 400 moves to act 420. In one embodiment, when, in act 414, the processor determines the time period determined in act 410 is, for example, less than the first predetermined time period and greater than the second predetermined time period, the method 400 moves to act 416. Otherwise, the method 400 moves to act 420.

In act 416, the processor identifies the second gear shift command as a first type of gear shift command. For example, the processor identifies the second gear shift command as a gear shift correction and controls electronic shifting of the bicycle (e.g., the rear derailleur of the bicycle), such that the bicycle shifts in a second direction (e.g., at least back to the first gear). The second direction is opposite the first direction.

For example, the processor may control electronic shifting of the bicycle based on the first shift direction determined in act 404. When the first shift direction is determined to be outboard in act 404, the processor may control electronic shifting of the bicycle, such that the bicycle shifts in the inboard direction, at least back to the first gear. When the first shift direction is determined to be inboard in act 404, the processor may control electronic shifting of the bicycle, such that the bicycle shifts in the outboard direction (e.g., at least back to the first gear). The same input device is used for gear shift correction regardless of the first shift direction (e.g., outboard or inboard). This is less confusing than using two different input devices depending on a direction of the gear shift correction (e.g., the second shift direction), and is more intuitive for the rider.

In one embodiment, when, in act 416, the processor identifies the second gear shift command as the first type of gear shift command, the processor may control electronic shifting of the bicycle, such that the bicycle shifts two or more gears in the second direction. For example, the processor may control electronic shifting of the bicycle, such that the bicycle shifts two gears in the second direction (e.g., from the second gear, past the first gear, and to a third gear). In other embodiments, the processor may control electronic shifting of the bicycle, such that the bicycle shifts three or more gears in the second direction.

In one embodiment, the processor adjusts the predetermined cadence band based on the identification of the second gear shift command as the first type of gear shift command (e.g., the gear shift correction), and based on the first shift direction. For example, when the first shift direction is outboard and the second gear shift command is identified as a gear shift correction, the processor may adjust the upper cadence limit of the predetermined cadence band upwards. When the first shift direction is inboard and the second gear shift command is identified as a gear shift correction, the processor may adjust the lower cadence limit of the predetermined cadence band downwards. Other adjustments of the predetermined cadence band may be provided.

In act 418, the processor initiates a shift of the bicycle in the second shift direction, from the second gear (e.g., the second cog) at least back to the first gear (e.g., the first cog) based on the first type of gear shift command identified in act 416 (e.g., a gear shift correction). In one embodiment, the processor initiates a shift of the bicycle of at least two gears (e.g., cogs) in the second shift direction.

In one embodiment, the processor ignores additional gear shift commands generated within the automatic shifting mode (e.g., generated by the processor operating within the automatic shifting mode) for a third predetermined time period (e.g., 2.0 s) after the processor identifies the second gear shift command in act 408 or initiates the shift of the bicycle in act 418. In other words, the processor pauses the automatic shifting for the third predetermined time period after the processor identifies the second gear shift command in act 408 or initiates the shift of the bicycle in act 418. The third predetermined time period prevents the gear shift correction identified in act 416 from being undone by the automatic shifting mode. In one embodiment, for the third predetermined time period, the processor may initiate shifts of the bicycle in the second shift direction in response to additional gear shift commands generated within the automatic shifting mode, but may ignore additional gear shift commands generated within the automatic shifting mode for shifts in the first shift direction. In other words, for the third predetermined time period, the processor may only allow automatic shift in a same direction as the gear shift correction.

In act 420, the processor determines, based on the comparison, in act 412, of the time period determined in act 410 to the first predetermined time period, whether the time period determined in act 410 is greater than the first predetermined time period. When, in act 420, the processor determines the time period determined in act 410 is, for example, greater than the first predetermined time period, the method 400 moves to act 422. Otherwise, the method 400 moves to act 426.

In act 422, the processor identifies the second gear shift command as a second type of gear shift command that is different than the first type of gear shift command (e.g., the gear shift correction). For example, when the processor determines, in act 420, that the time period determined in act 410 is greater than the first predetermined time period, the processor may identify the second gear shift command as a manual shift override (e.g., the second type of gear shift command). A direction (e.g., the second shift direction) of the gear shift correction (e.g., the first type of gear shift command), for example, identified in act 416 is dependent on the first gear shift direction; a direction of the manual shift override is independent of the first gear shift direction.

Instead, the manual shift override may be dependent on other parameters. For example, a direction of the manual shift override may be dependent on a length of the user input at the input device. In one embodiment, the processor determines a length of the user input. For example, the second gear shift command generated by, for example, the control device may include data indicating an amount of time of user interaction with the input device (e.g., the length of the user input), and the processor may determine the length of the user input based on the data included within the second gear shift command. The processor may initiate a shift of the bicycle in the first shift direction (e.g., outboard) in response to the second gear shift command when the processor identifies a short user interaction with the input device (e.g., less than 0.5 s, 0.75 s, or 1.0 s), and may initiate a shift of the bicycle in the second shift direction (e.g., inboard) in response to the second gear shift command when the processor identifies a long user interaction with the input device (e.g., greater than 0.5 s, 0.75 s, or 1.0 s).

In act 424, the processor initiates a shift of the bicycle based on the second type of gear shift command identified in act 422 (e.g., a manual shift override). In one embodiment, the processor initiates a shift of the bicycle based on the determined length of the user input. Other control may be provided based on the second type of gear shift command being identified in act 422.

In act 426, the processor ignores the second gear shift command. The method 400 moves to act 426 when the time period determined in act 410 is less than the second predetermined time period. With such a determination, the processor may identify the second gear shift command as an anticipating shift (e.g., a third type of gear shift command). The second predetermined time period may, for example, represent a minimum time it would take the rider to react to the automatic shift initiated in act 406. A time period determined in act 410 that is less than the second predetermined time period may represent a rider manually shifting in response to riding conditions instead of allowing the automatic shifting mode to do the shifting. Accordingly, to prevent, for example, the automatic shift identified in act 406 from being repeated (e.g., with an anticipating shift in a same direction, such as the first shifting direction), the processor may ignore the second gear shift command identified in act 408 when the second gear shift command is identified as an anticipating shift in act 426 (e.g., when the time period determined in act 410 is less than the second predetermined time period).

The method 400 may be repeated any number of times. For example, until the automatic shifting mode is exited (e.g., in response to a user input and/or a state of the bicycle), the method 400 may be repeated any time a gear shift command is generated in response to a user input after an automatic gear shift command is generated (e.g., by the processor) within the automatic shifting mode, but before a next automatic gear shift command is generated (e.g., by the processor) within the automatic shifting mode. In other words, the method 400 may be repeated each time an automatic gear shift command is generated.

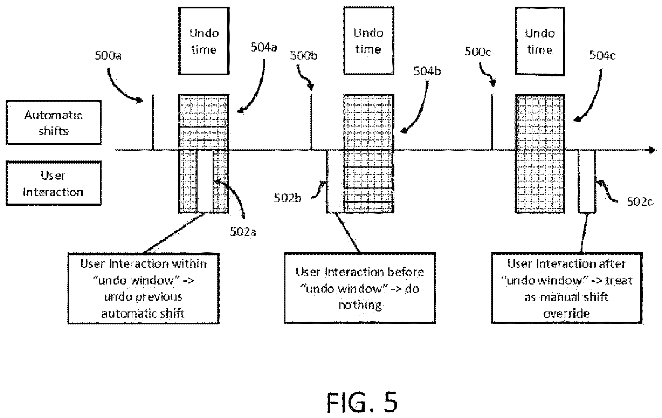

FIG. 5 illustrates the generation of three successive automatic shifts 500a, 500b, 500c within an automatic shifting mode of a bicycle, and different user interactions 502a, 502b, 502c (e.g., a first user interaction 502a, a second user interaction 502b, and a third user interaction 502c) after the three successive automatic shifts 500a, 500b, 500c, respectively (e.g., a first automatic shift 500a, a second automatic shift 500b, and a third automatic shift 500c). FIG. 5 also illustrates time periods 504a, 504b, 504c (e.g., defined by the first predetermined time period and the second predetermined period; undo windows) after the automatic shifts 500a, 500b, 500c. User interaction (e.g., with a single input device) during the time period 504 is treated as a gear shift correction to undo a previous automatic shift (e.g., according to the method 400 of FIG. 4).

The user interaction timing (e.g., as to whether the user interaction is within the time period 504) may be defined by a start of the user interaction and/or an end of the user interaction. In one embodiment, if the user interaction starts within the time period 504, the user interaction is considered to be within the time period 504. In another embodiment, if the user interaction ends within the time period 504, the user interaction is considered to be within the time period 504. In yet another embodiment, the user interaction is to both start and end within the time period 504 to be considered to be within the time period 504.

The first automatic shift 500a and corresponding first user interaction 502a illustrate a user interaction that is treated as a gear shift correction. The first user interaction 502a is executed (e.g., and the gear shift request generated in response to the first user interaction 502a is received) within the corresponding undo window 504a (e.g., a first undo window). Accordingly, the gear shift request (e.g., a first gear shift request) generated in response to the first user interaction 502a corrects and undoes the first automatic shift 500a.

The second automatic shift 500b and the corresponding second user interaction 502b illustrate a user interaction that is treated as an anticipating shift. The second user interaction 502b is executed (e.g., and the gear shift request generated in response to the second user interaction 502b is received) before the corresponding undo window 504b. Accordingly, the gear shift request (e.g., a second gear shift request) generated in response to the second user interaction 502b is ignored.

The third automatic shift 500c and the corresponding third user interaction 502c illustrate a user interaction that is treated as a manual shift override. The third user interaction 502c is executed (e.g., and the gear shift request generated in response to the third user interaction 502c is received) after the corresponding undo window 504c. Accordingly, the gear shift request (e.g., a third gear shift request) generated in response to the third user interaction 502c is treated differently than the first gear shift request (e.g., generated in response to the first user interaction 502a).

For example, for manual override, the third gear shift request may be processed based on the digital double tap principle. The third user interaction 502c, like the first user interaction 502a and the second user interaction 502b, is at the single input device of the bicycle. Based on the digital double tap principle, the third gear shift request is processed based on a length of the third user interaction 502c. When the third user interaction 502c is a short press (e.g., less than 0.75 s, 1.0 s, or 1.25 s) at the single input device, for example, a shift to a higher gear is executed, and when the third user interaction 502c is a long press (e.g., greater than .75 s, 1.0 s, or 1.25 s) at the single input device, for example, a shift to a lower gear is executed.

In one embodiment, the digital double tap principle also applies to the scenario in which a user interaction 502 is executed before the corresponding undo window 504 (e.g., the second user interaction 502b, which is before the second undo window 504b). In such an embodiment, instead of the user interaction 502 before the corresponding undo window 504 being ignored, a gear shift request generated in response to the user interaction 502 is processed based on the digital double tap principle.

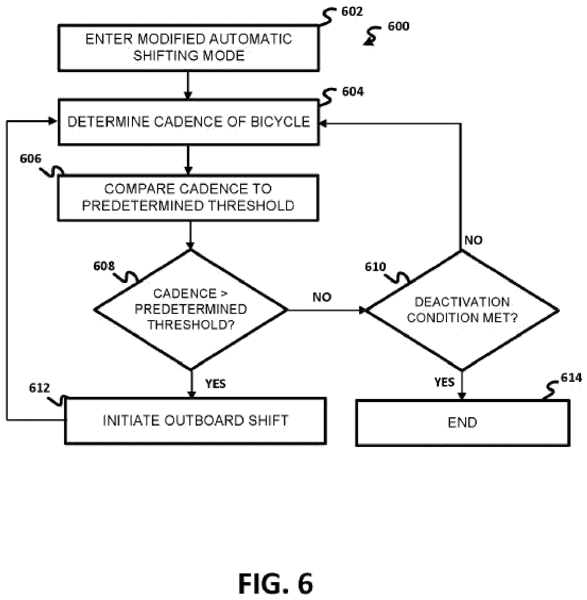

FIG. 6 illustrates a flow chart for another embodiment of a method for modifying an automatic shifting mode (e.g., an automatic outboard shifting mode). For example, a method 600 may modify the automatic shifting mode in that, after a rider manually enters the automatic outboard shifting mode, automatic shifting is provided in only one direction (e.g., an outboard direction) until a deactivation condition is met. As presented in the following sections, the acts may be performed using any combination of the components indicated in previous figures. For example, the following acts may be performed by at least some components of the bicycle control system 700 and/or the control system 800, as well as additional or other components. In an embodiment, the acts may be performed by, for example, the system control device 150, the bicycle component 708A (e.g., a processor of the rear derailleur 124), another processor, another component of the bicycle, or any combination thereof. Additional, different, or fewer acts may be provided. The acts are performed in the order shown or in other orders. The acts may be repeated.

Prior to the method 600 shown in FIG. 6, an instantaneous cadence may be set, or established, upon starting or initiating the automatic mode. In the embodiment, automatic shifting starts with pushing or otherwise actuating an up shift button and/or a down shift button for a period of time, such as three seconds. This time is variable and may be anything longer than a normal shift time. The system control device records the cadence of the rider during the three seconds, for example. The system control device sets the upper cadence limit and the lower cadence limit (e.g., a cadence band and a cadence range). The cadence is measured and compared with the cadence band, and the system control device may shift gears based on the comparison (e.g., if the measured cadence is outside of the cadence band).

In act 602, a processor of the bicycle (e.g., the processor of the rear derailleur 124 or a processor of the system control device 150) enters the modified automatic shifting mode (e.g., the automatic outboard shifting mode; launch control). Entering the modified automatic shifting mode of the bicycle may include determining, by the processor, whether a modified automatic shifting mode entry condition has been met, and entering, by the processor, the modified automatic shifting mode of the bicycle when, based on the determining, the modified automatic shifting mode entry condition has been met.

The modified automatic shifting mode entry condition may represent any number of configurations, riding conditions, or parameters of the bicycle. For example, the modified automatic shifting mode entry condition may include actuation of, for example, an input device of the bicycle (e.g., an input device, such as a button, of the system control device 150) for a predetermined amount of time

(e.g., three seconds). Other automatic shifting mode entry conditions may be provided.

For example, standing in a start gate, at a red light, just prior to accelerating for a sprint in a road race, or in another riding scenario, a rider of the bicycle may actuate the input device of the bicycle for at least the predetermined amount of time. The input device may generate a signal identifying the input device and an amount of time of the actuation of the input device. The input device may transmit the generated signal to the processor, and the processor may determine whether the amount of time identified in the generated signal is greater than (e.g., or equal to) the predetermined amount of time. When, based on this determination, the amount of time identified in the generated signal is greater than (e.g., or equal to) the predetermined amount of time, the processor enters the modified automatic shifting mode.

In act 604, the processor determines a cadence of the bicycle. The cadence of the bicycle may be determined in any number of ways. For example, the bicycle may include one or more sensors (e.g., including a torque sensor, cadence sensor and/or a power meter), and at least the cadence sensor, for example, may generate cadence data. The processor may be in communication with the cadence sensor, and the cadence sensor may transmit the generated cadence data to the processor. The processor may determine the cadence of the bicycle at least based on the cadence data generated by the cadence sensor. The cadence determined by the processor in act 604 may be an instantaneous cadence or an average cadence over a predetermined period of time (e.g., three seconds).

In act 606, the processor compares the cadence of the bicycle determined in act 604 to a predetermined threshold cadence (e.g., a first predetermined threshold cadence). For example, the processor determines whether the cadence of the bicycle determined in act 604 is greater than, less than, or equal to the predetermined threshold cadence. The predetermined threshold cadence may be stored in a memory in communication with the processor, and may represent an upper cadence limit of a cadence range (e.g., of the method 300). The predetermined threshold cadence may be calculated from sensor inputs (cadence, torque, wheel speed, and derivatives thereof).

In other embodiments, the predetermined threshold cadence may be different than the upper cadence limit of the cadence range. For example, the predetermined threshold cadence may be less than the upper cadence limit of the cadence range to account for further increase of speed and cadence of the bicycle (e.g., within acceleration during a sprint) after initiation of a shift of a bicycle. This may prevent a desired maximum cadence (e.g., the upper cadence limit of the cadence range) from being exceeded.

For example, the processor may estimate an amount of time until the desired maximum cadence is reached based on any number of parameters including, for example, the cadence of the bicycle determined in act 604, a power output of the bicycle or rider (e.g., measured by a power meter of the bicycle and transmitted to the processor), a wheel speed (e.g., measured by a wheel speed sensor of the bicycle and transmitted to the processor), a derivative to the cadence of the bicycle (e.g., calculated based on the cadence of the bicycle determined in act 604), torque, a derivative of the power output of the bicycle, a derivative of the wheel speed of the bicycle, cassette cog size, a number and distribution of shift ramps, other parameters, or any combination thereof.

For example, the processor may determine a rate change of the cadence of the bicycle based on the cadence determined in act 604 (e.g., a first cadence), a previously determined cadence of the bicycle (e.g., a second cadence), and a time period between the first cadence and the second cadence. Using the cadence determined in act 604 and the determined rate change of the cadence, the processor may determine the amount of time until the desired maximum cadence is reached. The processor may determine a time difference between the amount of time until the desired maximum cadence is reached and an estimated shift time (e.g., amount of time it takes to shift one cog in the outboard direction). The processor may estimate a cadence increase in an amount of time equal to the determined time difference, and determine the predetermined threshold cadence as a sum of the cadence determined in act 604 and the estimated cadence increase. The processor may determine the predetermined threshold cadence in other ways.

In act 608, the processor determines, based on the comparison in act 606, whether the cadence of the bicycle determined in act 604 is greater than (e.g., or equal to) the predetermined threshold cadence. If, based on the determination in act 608, the cadence of the bicycle determined in act 604 is greater than (e.g., greater than or equal to) predetermined threshold cadence, the method 600 moves to act 612. Otherwise, the method 600 moves to act 610.

In act 610, the processor determines whether one or more deactivation conditions have been met. The processor may determine whether any number of different deactivation conditions have been met in act 610. For example, the one or more deactivation conditions may include a highest gear being reached, the cadence of the bicycle determined in act 604 being less than (e.g., or equal to) a predetermined minimum threshold cadence (e.g., a second predetermined threshold cadence) for a predetermined amount of time, torque, a power output of the bicycle (e.g., as determined by a power meter of the bicycle and transmitted to the processor) being below a predetermined threshold power, actuation of an input device of the bicycle (e.g., the button of the system control device 150) for a predetermined amount of time, or any combination thereof. Other deactivation conditions may be provided. One example of a deactivation condition maybe a wheel speed that exceeds the legal limit.

In one embodiment, the processor determines, in act 610, whether two or more deactivation conditions have been met. For example, the processor determines whether the power output or torque of the bicycle is below the predetermined threshold power or torque, and whether the cadence of the bicycle, as determined in act 604, is less than (e.g., or equal to), for example, the second predetermined threshold cadence for a predetermined amount of time. Other combinations of deactivation conditions may be provided.

If, based on the determination in act 610, the one or more deactivation conditions have been met, the method 600 moves to act 614, in which the method 600 ends (e.g., the automatic outboard shifting mode is exited). If, based on the determination in act 610, the one or more deactivation conditions have not been met, the method 600 returns to act 604, and a portion of the method 600 (e.g., at least the determination in act 604, the comparison in act 606, and the determination in act 608) is repeated.

In act 612, the processor initiates a shift of the bicycle in an outboard direction. For example, the processor instructs a rear derailleur of the bicycle to shift in the outboard direction. In one embodiment, the processor instructs the rear derailleur of the bicycle to shift one cog in the outboard direction. In other embodiments, the processor may instruct the rear derailleur of the bicycle to shift at least two cogs in the outboard direction.

After act 612, the method 600 returns to act 604, and a portion of the method 600 (e.g., at least the determination in act 604, the comparison in act 606, and the determination in act 608) is repeated. For example, after the processor initiates the shift of the bicycle in the outboard direction (e.g., a first outboard shift) in act 612, the processor may initiate a second outboard shift of the bicycle in repeated act 612 when the processor again determines, in repeated act 608, that, based on the comparison in repeated act 606, the cadence of the bicycle determined in repeated act 604 is greater than (e.g., or equal to) the predetermined threshold cadence.

In one embodiment, the processor may delay (e.g., pause) initiation of the second outboard shift of the bicycle, for example, to provide that a double shift is not executed. For example, the processor may delay initiation of the second outboard shift of the bicycle until a time interval has passed (e.g., after the initiation of the first outboard shift in act 612). In one embodiment, the processor may start a timer when the first outboard shift is initiated in act 612, and may initiate the second outboard shift of the bicycle in repeated act 612 once the timer is greater than (e.g., or equal to) the time interval.

The time interval may be a predetermined time interval. In one embodiment, the processor determines the time interval from cadence of the bicycle, wheel speed of the bicycle, a derivative of the cadence, a derivative of the wheel speed, chainring size, information on cog size, a number and distribution of shift ramps on a cassette of the bicycle, or any combination thereof.

As another example, the processor may delay initiation of the second outboard shift of the bicycle until a number of chain links has passed (e.g., after the initiation of the first outboard shift in act 612). In one embodiment, the bicycle includes a chainring angle sensor, and the processor identifies each link pass-by based on data generated by and received from the chainring angle sensor. The processor may count each link pass-by and compare the count to the number of chain links. The processor may delay the initiation of the second outboard shift of the bicycle in repeated act 612 until, based on the comparison, the count is greater than (e.g., or equal to) the number of chain links.

The number of chain links may be a predetermined number of chain links. In one embodiment, the processor determines the number of chain links from cadence of the bicycle, wheel speed of the bicycle, a derivative of the cadence, a derivative of the wheel speed, chainring size, information on cog size, a number and distribution of shift ramps on a cassette of the bicycle, or any combination thereof.

The portion of the method 600 may be repeated any number of times. In one embodiment, the portion of the method 600 is repeated until an outermost cog is reached, and no more outboard shifts are possible. In another embodiment, the portion of the method 600 is repeated two or more times until the one or more deactivation conditions have been met. In yet another embodiment, the portion of the method 600 is repeated until a government mandated maximum speed of an electric bicycle is reached.

In one embodiment, the bicycle is an electric bicycle, and the electric bicycle includes an assist motor. The processor may adjust the assist motor of the electric bicycle from a first power setting to a second power setting after the entering of the modified automatic shifting mode of act 602. The second power setting may, for example, be a maximum power setting. In other embodiments, the second power setting is less than the maximum power setting but greater than the first power setting. The processor may adjust the assist motor of the electric bicycle from the second power setting back to the first power setting when the processor determines the one or more deactivation conditions have been met in act 610.

In another embodiment, the bicycle includes an electronic suspension system, and the electronic suspension system includes a suspension component (e.g., including a spring and/or a damper). The processor may adjust damping (e.g., rebound damping and/or low-speed compression damping) of the suspension component of the electronic suspension system from a first damping setting to a second damping setting after the entering of the modified automatic shifting mode of act 602. The second damping setting may, for example, be greater than the first damping setting. In other embodiments, the second damping setting is less than the first damping setting. The processor may adjust the suspension component of the suspension system from the second damping setting back to the first damping setting when the processor determines the one or more deactivation conditions have been met in act 610.

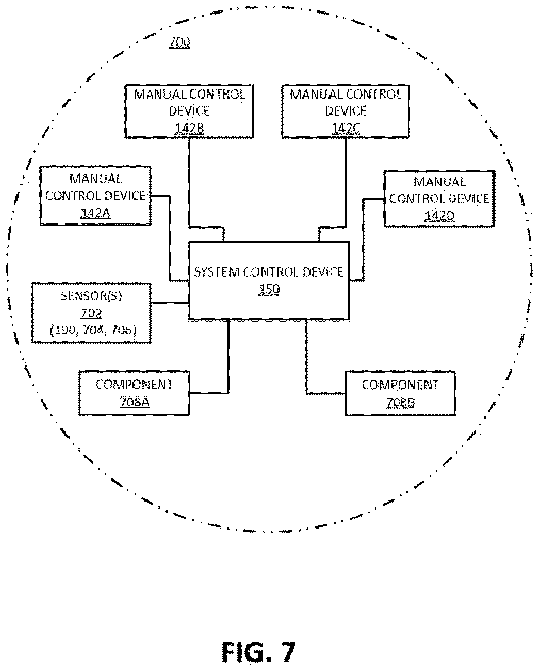

FIG. 7 illustrates the bicycle control system 700 that includes multiple manual control devices 142A-D, the system control device 150, at least one sensor 702, such as the device 190, a cadence sensor 704, and/or a speed sensor 706 described with respect to FIG. 1, and bicycle components 708A-B, such as a rear derailleur and/or a front derailleur, or one or more internal gear hubs. The manual control devices 142A-D are communicatively coupled with the system control device 150, such as by a cable or wirelessly, to communicate control signals to the manual control device(s) 142. The system control device 150 is configured to communicate control signals responsive to the received control device signals, or resulting from automatic shifting determinations, to the component(s) 708A-B. In an embodiment, the system control device 150 is configured to communicate the control signals wirelessly to one or multiple bicycle components 708A-B. The control signals may be communicated wirelessly using any technique, protocol, or standard. For example, Institute of Electrical and Electronics Engineers ("IEEE") 802.11 standards, IEEE 802.15.1 or BLUETOOTH ^{®} standards, ANT ^{™} or ANT+ ^{™} standards, and/or AIREA^{™} standards may be used. The bicycle components 708A-B may be any bicycle component. For example, the components 708A-B may be drive train components and/or suspension components. In an embodiment, a component 708A may be a rear derailleur and the other component 708B may be a front derailleur. Other components may also be included. For example, the system control device 150 may be in communication with, or provide control signals for, three or more components, such as a front derailleur, a rear derailleur, and a front suspension system. Alternatively, the system control device 150 may only provide control signals for a single component 708A. In an embodiment, the receiver may communicate control signals wirelessly with one component 708A, and the one component 708A may communicate the control signals to another component 708B.

In an embodiment, the bicycle control system 700 includes at least one manual control device 142 including a control mechanism for generating a control signal to control at least one bicycle component 708A. The system control device 150 may be a standalone device, or may be integrated with one or more components 708A-B.

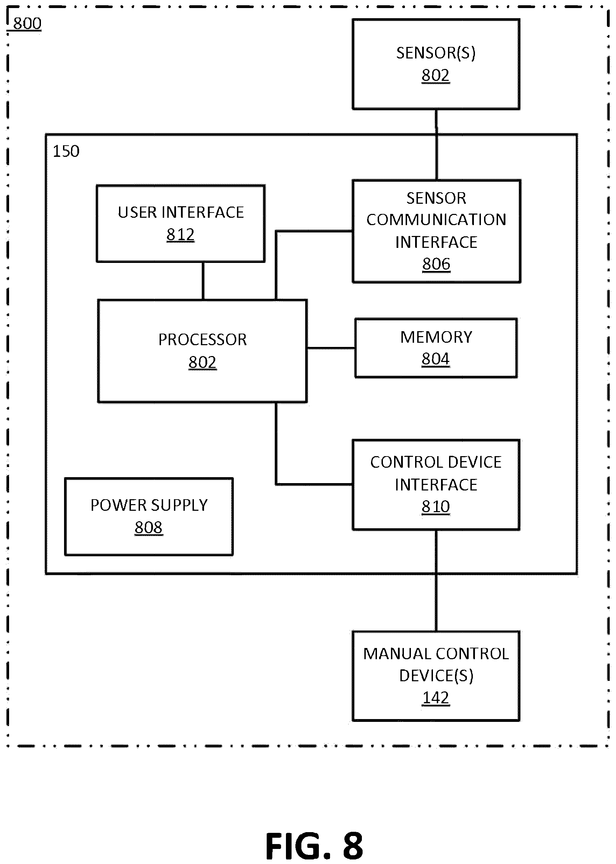

FIG. 8 is a block diagram of an exemplary control system 800 for a bicycle that may be used to implement a system control device 150. The control system 800 may be used alone to communicate with and control bicycle components, or the control system 800 may be used in conjunction with at least one other control system for components of the bicycle, such as a primary control system that may include alternative control devices such as brake lever housing integrated shift controllers. The control system 800 includes the system control device 150, one or more control devices 142, and/or one or more sensors 702. The system control device 150 includes a processor 802, a memory 804, a sensor communication interface 806, a power supply 808, and a control device interface 810. Optionally, the system control device 150 may also include a user interface 812. Additional, different, or fewer components are possible for the system control device 150.

The processor 802 may include a general processor, digital signal processor, an application specific integrated circuit (ASIC), field programmable gate array (FPGA), analog circuit, digital circuit, combinations thereof, or other now known or later developed processor. The processor 802 may be a single device or combinations of devices, such as through shared or parallel processing. In one embodiment, for example, the CPU or processor 802 used may be an Atmel^{®} ATmega324PA microcontroller with an internal eeprom memory, and a transmitter and a receiver used may be an Atmel^{®} AT86RF231 2.4GHz transceiver utilizing AES encryption and DSS spread spectrum technology supporting 16 channels and the IEEE 802.15.4 communication protocol.

The memory 804 may be a volatile memory or a non-volatile memory. The memory 804 may include one or more of a read only memory (ROM), random access memory (RAM), a flash memory, an electronic erasable program read only memory (EEPROM), or other type of memory. The memory 804 may be removable from the system control device 150, such as a secure digital (SD) memory card. In a particular non-limiting, exemplary embodiment, a computer-readable medium may include a solid-state memory such as a memory card or other package that houses one or more non-volatile read-only memories. Further, the computer-readable medium may be a random access memory or other volatile re-writable memory. Additionally, the computer-readable medium may include a magnetooptical or optical medium, such as a disk or tapes or other storage device. Accordingly, the disclosure is considered to include any one or more of a computer-readable medium and other equivalents and successor media, in which data or instructions may be stored.

The memory 804 is a non-transitory computer-readable medium and is described to be a single medium. However, the term "computer-readable medium" includes a single medium or multiple media, such as a centralized or distributed memory structure, and/or associated caches that are operable to store one or more sets of instructions and other data. The term "computer-readable medium" shall also include any medium that is capable of storing, encoding, or carrying a set of instructions for execution by a processor or that cause a computer system to perform any one or more of the methods or operations disclosed herein.

In an alternative embodiment, dedicated hardware implementations, such as application specific integrated circuits, programmable logic arrays and other hardware devices, may be constructed to implement one or more of the methods described herein. Applications that may include the apparatus and systems of various embodiments may broadly include a variety of electronic and computer systems. One or more embodiments described herein may implement functions using two or more specific interconnected hardware modules or devices with related control and data signals that may be communicated between and through the modules, or as portions of an application-specific integrated circuit. Accordingly, the present system encompasses software, firmware, and hardware implementations.

The power supply 808 is a portable power supply, which may be stored internal to the system control device 150, or stored external to the system control device 150 and communicated to the system control device 150 through a power conductive cable. The power supply 808 may involve the generation of electric power, for example, using a mechanical power generator, a fuel cell device, photovoltaic cells, or other power generating devices. The power supply 808 may include a battery such as a device consisting of two or more electrochemical cells that convert stored chemical energy into electrical energy. The power supply 808 may include a combination of multiple batteries or other power providing devices. Specially fitted or configured battery types, or standard battery types such as CR 2012, CR 2016, and/or CR 2032 may be used.

The control device interface 810 provides for data communication from the control devices 142 to the system control device 150. The control device interface 810 includes wired conductive signal and/or data communication circuitry operable to interpret signals provided by different control devices 142. For example, the control device interface 810 may include a series of ports for receiving control device input cables. Each of the ports may be distinguishable by the processor 802 through grouping tables or arrays, or through physical circuits or other circuitry that provide for grouping control device inputs. Alternatively, different control devices 142 may communicate with the system control device 150 wirelessly as is described herein.

The user interface 812 may be one or more buttons, keypad, keyboard, mouse, stylus pen, trackball, rocker switch, touch pad, voice recognition circuit, or other device or component for communicating data between a user and the system control device 150. The user interface 812 may be a touch screen, which may be capacitive or resistive. The user interface 812 may include a liquid crystal display ("LCD") panel, light emitting diode (LED), LED screen, thin film transistor screen, or another type of display. The user interface 812 may also include audio capabilities, or speakers. In an embodiment, the user interface is configured to provide a notice to a user that the system control device 150 has entered automatic mode, paused automatic mode, exited automatic mode, and/or modified a parameter of automatic mode. The notice may be audible, visual, and/or haptic. For example, an audible beep may be used. In an embodiment, an LCD panel is configured to display a visual notice.

In an embodiment, the user interface 812 includes multiple buttons and an LED indicator. The multiple buttons are used to communicate commands to the system control device 150, and the LED indicator lights to indicate input of the commands.

The sensor communication interface 806 is configured to communicate data such as sensor values with at least one sensor 702 The sensor communication interface 806 communicates the data using any operable connection. An operable connection may be one in which signals, physical communications, and/or logical communications may be sent and/or received. An operable connection may include a physical interface, an electrical interface, and/or a data interface. The sensor communication interface 806 provides for wireless communications in any now known or later developed format.

Wireless communication between components is described herein. Although the present specification describes components and functions that may be implemented in particular wireless communication embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

In an embodiment, components of the bicycle described herein will communicate with each other. In the case of wireless communication, the components will initially be paired so as to allow secure communication between components on the bicycle without interference from devices not associated with the system. Next one or more of the components may be paired with a separate device like a computer, tablet, or phone. This paired device may provide the user interface to allow the user to communicate with the components on the bicycle, for example the system control device 150. Examples of communication are updating firmware, setting variables, and running diagnostic tools and analysis.

In accordance with various embodiments of the present disclosure, the methods described herein may be implemented with software programs executable by a computer system, such as the system control device 150. Further, in an exemplary, non-limited embodiment, implementations can include distributed processing, component/object distributed processing, and parallel processing. Alternatively, virtual computer system processing can be constructed to implement one or more of the methods or functionality as described herein.

The methods and techniques described herein may be implemented using hardware configurations described herein and one or more computer programs providing instructions for the hardware. A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows may also be performed by, and the apparatus may also be implemented as, special purpose logic circuitry (e.g., a field programmable gate array (FPGA) or an application specific integrated circuit (ASIC)).

As used in this application, the term 'circuitry' or 'circuit' refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile computing device or a similar integrated circuit in server, a cellular network device, or other network device.

Processors suitable for the execution of a computer program include, by way of example, both general and special purpose microprocessors, and any one or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant ("PDA"), a mobile audio player, a Global Positioning System ("GPS") receiver, or a system control device 150 to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry. In an embodiment, a system control device 150 is integrated with a mobile telephone, PDA, a mobile audio player, a GPS receiver, and communicates wirelessly with bicycle components to provide automatic mode control.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A method for controlling electronic shifting of a bicycle, the method comprising:
identifying, by a processor, a first gear shift command, a source of the first gear shift command being the processor or another processor;
determining, by the processor, a first shift direction based on the first gear shift command;
initiating, by the processor, a shift of the bicycle in the first shift direction, from a first gear to a second gear, based on the first gear shift command;
identifying, by the processor, a second gear shift command, a source of the second gear shift command being a control device of the bicycle, the second gear shift command being after the first gear shift command;
determining, by the processor, a time period between the identifying of the first gear shift command and the identifying of the second gear shift command;
comparing, by the processor, the determined time period to a predetermined time period; and
controlling, by the processor, the electronic shifting of the bicycle, such that the bicycle shifts in a second direction, at least back to the first gear, when, based on the comparing, the determined time period is less than the predetermined time period, the second direction being opposite the first direction.

2. The method of claim 1, wherein identifying the first gear shift command comprises generating, by the processor, the first gear shift command based on an automatic shifting algorithm,
wherein as an optional step the method further comprises adjusting, by the processor, a cadence range of the automatic shifting algorithm based on the first shift direction.

3. The method of claim 1 or 2, wherein identifying the second gear shift command comprises receiving, by the processor, the second gear shift command from the control device of the bicycle in response to a user input at an input device of the control device of the bicycle,
wherein the method further comprises determining a length of the user input, the length of the user input identifying an amount of time of user interaction with the input device of the shifting device of the bicycle, and
wherein the controlling further comprises controlling, by the processor, the electronic shifting of the bicycle, such that the bicycle shifts in either the first direction or the second direction based on a length of the user input when, based on the comparing, the determined time period is greater than the predetermined time period,
wherein as an optional feature the input device of the control device is a button or a lever, and wherein as a further optional feature the input device is the only input device of the control device.

4. The method of claim 3, wherein the user input is a first user input at the input device of the control device, and
wherein the method further comprises:
identifying, by the processor, a third gear shift command, the third gear shift command being after the second gear shift command, a source of the third gear shift command being the processor;
determining, by the processor, a shift direction of the third gear shift command, the shift direction of the third gear shift command being the second direction;
initiating, by the processor, a shift of the bicycle in the second direction, from the first gear to a third gear, based on the third gear shift command;
receiving, by the processor, a fourth gear shift command from the control device of the bicycle in response to a second user input at the same input device of the control device of the bicycle, the fourth gear shift command being after the third gear shift command;
determining, by the processor, a time period between the identifying of the third gear shift command and the receiving of the fourth gear shift command;
comparing, by the processor, the determined time period between the identifying of the third gear shift command and the receiving of the fourth gear shift command to the predetermined time period; and
controlling, by the processor, the electronic shifting of the bicycle, such that the bicycle shifts in the first direction, at least back to the first gear, when, based on the comparing, the determined time period between the identifying of the third gear shift command and the receiving of the fourth gear shift command is less than the predetermined time period.

5. The method of one of the preceding claims, wherein the controlling comprises controlling, by the processor, the electronic shifting of the bicycle, such that the bicycle shifts at least two gears, to a third gear beyond the first gear, in the second direction when, based on the comparing, the determined time period is less than the predetermined time period.

6. The method of one of the preceding claims , wherein the predetermined time period is a first predetermined time period,
wherein the method further comprises comparing, by the processor, the determined time period to a second predetermined time period, and
wherein the controlling comprises controlling, by the processor, the electronic shifting of the bicycle, such that the bicycle shifts in the second direction, at least back to the first gear, when:
based on the comparing of the determined time period to the second predetermined time period, the determined time period is greater than the second predetermined time period; and
based on the comparing of the determined time period to the first predetermined time period, the determined time period is less than the first predetermined time period.

7. The method of claim 6, wherein the controlling further comprises ignoring, by the processor, the second gear shift command when, based on the comparing of the determined time period to the second predetermined time period, the determined time period is less than the second predetermined time period, wherein as an optional step the method further comprises ignoring any additional gear shift commands from the processor for a third predetermined time period after the identifying of the second gear shift command.

8. A method for controlling electronic shifting of a bicycle, the method comprising:
entering, by a processor, an automatic shifting mode of the bicycle;
determining, by the processor, a cadence of the bicycle;
comparing, by the processor, the determined cadence of the bicycle to a predetermined threshold cadence;
initiating, by the processor, a shift of the bicycle in an outboard direction when, based on the comparing, the determined cadence of the bicycle is greater than or equal to the predetermined threshold cadence; and
repeating the determining, the comparing, and the initiating until a deactivation condition is met, such that the bicycle is only shifted in the outboard direction until the deactivation condition is met.

9. The method of claim 8, wherein the automatic shifting mode is an automatic outboard shifting mode, and
wherein entering the automatic shifting mode of the bicycle comprises:
determining, by the processor, whether an automatic mode entry condition has been met;
entering, by the processor, the automatic shifting mode of the bicycle when, based on the determining, the automatic mode entry condition has been met,
wherein as an optional step the automatic mode entry condition comprises actuation of an input device of the bicycle for a predetermined amount of time, the input device being in communication with the processor.

10. The method of claim 8 or 9, wherein determining the cadence of the bicycle comprises:
receiving, by the processor, cadence data from a sensor of the bicycle, the sensor being in communication with the processor; and
determining the cadence of the bicycle based on the received cadence data.

11. The method of one of claims 8 to 10, wherein the predetermined threshold cadence is a first predetermined threshold cadence, and
wherein the method further comprises identifying the deactivation condition is met, wherein identifying the deactivation condition is met comprises:
identifying, by the processor, a highest gear is reached;
determining, by the processor, the cadence of the bicycle is below a second predetermined threshold cadence for a predetermined amount of time;
determining, by the processor, a power output of the bicycle and determining, by the processor, the power output is below a predetermined threshold power;
identifying actuation of an input device of the bicycle for a predetermined amount of time, the input device being in communication with the processor; or
any combination thereof.

12. The method of one of claims 8 to 11, wherein the outboard shift is a first outboard shift, and
wherein the method further comprises:
determining, by the processor, an amount of time or a number of chain links passed since the initiating of the outboard shift of the bicycle;
initiating, by the processor, a second outboard shift of the bicycle when, based on the repeated determining of the cadence of the bicycle and the repeated comparing of the determined cadence of the bicycle to the predetermined threshold cadence, the determined cadence is greater than or equal to the predetermined threshold cadence;
comparing the determined amount of time to a predetermined amount of time or comparing the determined number of chain links to a predetermined number of chain links; and
pausing the second outboard shift when, based on the comparing of the determined amount of time to the predetermined amount of time or the comparing of the determined number of chain links to the predetermined number of chain links, the determined amount of time is less than the predetermined amount of time or the determined number of chain links is less than the predetermined number of chain links.

13. The method of one of claims 8 to 12, wherein the bicycle is an electric bicycle, the electric bicycle comprising an assist motor, and
wherein the method further comprises:
adjusting the assist motor of the electric bicycle from a first power setting to a second power setting after the entering of the automatic shifting mode of the electric bicycle, the second power setting being a maximum power setting; and
adjusting the assist motor of the electric bicycle from the second power setting to the first power setting after the deactivation condition is met.

14. The method of one of claims 8 to 13, wherein the bicycle include an electronic suspension system, the electronic suspension system comprising a suspension component,
wherein the method further comprises:
adjusting damping of the suspension component from a first damping setting to a second damping setting after the entering of the automatic shifting mode of the electric bicycle, the second damping setting being greater than the first damping setting; and
adjusting the damping of the suspension component from the second damping setting to the first damping setting after the deactivation condition is met.

15. An electronic component of a bicycle, the electronic component comprising:
a processor configured to:
identify a first gear shift command, a source of the first gear shift command being the processor or another processor;
determine a first shift direction based on the first gear shift command;
initiate a shift of the bicycle in the first shift direction, from a first gear to a second gear, based on the first gear shift command;
identify a second gear shift command, a source of the second gear shift command being a control device of the bicycle, the second gear shift command being after the first gear shift command;
determine a time period between the identification of the first gear shift command and the identification of the second gear shift command;
compare the determined time period to a predetermined time period; and
control the electronic shifting of the bicycle, such that the bicycle shifts in a second direction, at least back to the first gear, when, based on the comparison, the determined time period is less than the predetermined time period, the second direction being opposite the first direction,
wherein as an optional feature the electronic component is a rear derailleur.
